# EUROPÄISCHE PATENTANMELDUNG

(11) **EP 3 243 871 A1**
(43) Veröffentlichungstag der Anmeldung: **15.11.2017**
(21) Anmeldenummer: 16168729.8
(22) Anmeldetag: 09.05.2016
(51) Int. Cl.: C08K 5/29, C08L 27/06, C08K 5/10

(54) **ZUSAMMENSETZUNGEN ENTHALTEND CARBODIIMID UND ESTER, DEREN HERSTELLUNG UND VERWENDUNG BEI DER STABILISIERUNG VON POLYVINYLCHLORID**

(71) Anmelder: LANXESS Deutschland GmbH, 50569 Köln (DE)
(72) Erfinder: FACKLAM, Thomas, 51375 Leverkusen (DE); LAUFER, Wilhelm, 67158 Ellerstadt (DE)

(57) **Zusammenfassung**

Die vorliegende Erfindung betrifft Zusammensetzungen enthaltend Carbodiimid und Ester, deren Herstellung und Verwendung als Weichmacher von Polymeren, insbesondere von Polyvinylchlorid.

## Beschreibung

Die vorliegende Erfindung betrifft Zusammensetzungen enthaltend Carbodiimid und Ester, deren Herstellung und Verwendung als Weichmacher von Polymeren, insbesondere von Polyvinylchlorid.

Mit dem Begriff "Weichmacher" (engl.: "plasticizer") werden in der chemisch-technischen Literatur Substanzen bezeichnet, die in der Lage sind, einen harten, spröden Stoff allein durch ihre Zumischung in eine weiche, dehnbare, zähe oder elastische Zubereitung zu überführen. Der Begriff wird in sehr vielen, unterschiedlichen Zusammenhängen verwendet. So ist er in der Betonverarbeitung (siehe zum Beispiel WO 98 58 887 A1 ) ebenso üblich, wie bei der Herstellung von Raketentreibstoffen (siehe zum Beispiel US 3,617,400). Im engeren Sinne werden mit dem Begriff "Weichmacher" in der Polymerverarbeitung eingesetzte Additive bezeichnet, die die mechanischen Eigenschaften von thermoplastischen Polymeren im oben genannten Sinne verändern können. Beispiele für Polymere, die mit Weichmachern verarbeitet werden, sind Polyvinylchlorid, Polyvinylbutyral, Polyacrylat, Polyamid und Celluloseacetat. Die mengenmäßig größte Anwendung ist in Polyvinylchlorid.

Diverse Ester, wie beispielsweise Alkylester der Benzoesäure, Dialkylester aliphatischer Dicarbonsäuren, wie z.B. Adipinsäurepolyester, Polyester von aliphatischen Dicarbonsäuren oder aliphatischen Di-, Tri- und Tetrolen, deren Endgruppen unverestert oder mit monofunktionellen Reagenzien, bevorzugt Monoalkoholen oder Monocarbonsäuren, verestert sind und deren zahlenmittlere Molmasse 1 000 - 20 000 g/mol beträgt, Trialkylester der Zitronensäure, acetylierte Trialkylester der Zitronensäure, Glycerinester, Benzoesäurediester von Mono-, Di-, Tri- oder Polyalkylenglycolen, Trimethylolpropanester, Dialkylester von Cyclohexandicarbonsäuren, Dialkylester der Terephthalsäure, Dialkylester der Phthalsäure, Trialkylester der Trimellitsäure, Carbonsäureester von Polyolen, Triarylester der Phosphorsäure, Diarylalkylester der Phosphorsäure, Trialkylester der Phosphorsäure, oder Arylester von Alkansulfonsäuren sind dem Fachmann als Weichmacher für diverse thermoplastischen Polymere, sogenannte thermoplastische Kunststoffe bekannt.

Werden diese alleine eingesetzt, kann es im Kunststoff allerdings zu Stabilitätsproblemen führen. Hierbei spielt die Hydrolyse der als Weichmacher eingesetzten Ester durch Umgebungsfeuchtigkeit eine Rolle.

Diverse Carbodiimide haben sich in vielen Anwendungen bewährt, z.B. als Hydrolyseschutzmittel für thermoplastische Kunststoffe, Ester-basierte Polyole, Polyurethane, Triglyceride und Schmierstofföle etc. Sie haben allerdings den Nachteil von Emission von gesundheitsbedenklichen Gasen.

Aufgabe der vorliegenden Erfindung war es daher, neue Zusammensetzungen bereitzustellen, die hydrolysebeständig und wenig flüchtig sind, somit Emissionen vermeiden und sich als Weichmacher für Kunststoffe, insbesondere PVC eignen, ohne dass diese dabei ihren sonstigen prägenden Eigenschaften verlieren.

Überraschenderweise wurde nun gefunden, dass die vorgenannten Aufgaben erfüllt sind, wenn eine Kombination bestimmter Ester, ausgewählt aus der Gruppe Alkylester der Benzoesäure, Dialkylester aliphatischer Dicarbonsäuren, Polyester von aliphatischen Dicarbonsäuren oder aliphatischen Di-, Tri- und Tetrolen, deren Endgruppen unverestert oder mit monofunktionellen Verbindungen, bevorzugt Monoalkoholen oder Monocarbonsäuren, verestert sind und deren zahlenmittlere Molmasse 1 000 - 20 000 g/mol beträgt, Trialkylester der Zitronensäure, acetylierte Trialkylester der Zitronensäure, Glycerinester, Benzoesäurediester von Mono-, Di-, Tri- oder Polyalkylenglycolen, Trimethylolpropanester, Dialkylester von Cyclohexandicarbonsäuren, Carbonsäureester von Polyolen, Dialkylester der Terephthalsäure, Dialkylester der Phthalsäure, Trialkylester der Trimellitsäure, Triarylester der Phosphorsäure, Diarylalkylester der Phosphorsäure, Trialkylester der Phosphorsäure, oder Arylester von Alkansulfonsäuren mit bestimmten Carbodiimiden eingesetzt wird.

Gegenstand der vorliegenden Erfindung sind daher Zusammensetzungen, enthaltend
(a) mindestens ein polymeres aromatisches Carbodiimid, der Formel (I)

   R⁴-R²-(-N=C=N-R²-)ₘ-R⁴ (I),

   indem
   m einer ganzen Zahl von 2 bis 500, bevorzugt 3 bis 20, ganz besonders bevorzugt 4 bis 10 entspricht,
   R² = Arylen, C₁-C₁₂Alkyl-/ C₇- C₁₈ -Alkylaryl-substituierte C₇-C₃₀-Arylene
      und
   R⁴ =-NCO, -NCNR², -NHCONHR⁵, -NHCONR⁵R⁶ oder-NHCOOR⁷ ist,
   wobei R⁵ und R⁶ gleich oder verschieden sind und einen C₁-C₁₂-Alkyl-, C₆-C₁₂-Cycloalkyl-, C₇-C₁₈-Aralkyl- oder Arylrest darstellen und R⁷ einem C₁ - C₂₂ - Alkyl-, C₆ - C₁₂ -Cycloalkyl-, C₆ - C₁₈ -Aryl oder C₇ - C₁₈ -Aralkylrest, sowie einem ungesättigten Alkylrest mit 2 - 22 oder ein Alkoxypolyoxyalkylenrest entspricht, und
(b) mindestens einen oder mehrerer Ester ausgewählt aus der Gruppe der C₉-C₁₀-Alkylester der Benzoesäure, Di- (C₈-C₁₂ )- Alkylester aliphatischer Dicarbonsäuren, vorzugsweise Bernsteinsäure, Adipinsäure und/oder Sebazinsäure, Polyester von aliphatischen Dicarbonsäuren vorzugsweise Bernsteinsäure, Adipinsäure und/oder Sebazinsäure, oder C₂-C₅- aliphatischen Di-, Tri- und Tetrolen, deren Endgruppen unverestert oder mit monofunktionellen Verbindungen, bevorzugt C₄-C₁₀- Monoalkoholen oder C₂-C₁₈- Monocarbonsäuren, verestert sind und deren zahlenmittlere Molmasse 1 000 - 20 000 g/mol beträgt, Tri(C₂-C₆)-alkylester der Zitronensäure, acetylierte Tri(C₂-C₆)-alkylester der Zitronensäure, Glycerinester, Benzoesäurediester von Mono-, Di-, Tri- oder Poly(C₂-C₃)-alkylenglycolen, Trimethylolpropanester, Di(C₈-C₁₂)-alkylester von Cyclohexandicarbonsäuren, Di(C₈-C₁₂)-alkylester der Terephthalsäure, Di(C₈-C₁₂)-alkylester der Phthalsäure, Tri(C₈-C₁₂)-alkylester der Trimellitsäure, Carbonsäureester von Polyolen, wie z.B. Tetra(C₄-C₈)-carbonsäureester des Pentaerythritols, Tri(C₆-C₁₀)-arylester der Phosphorsäure, Di(C₆-C₁₀ₒ)-aryl(C₈-C₁₂)-alkylester der Phosphorsäure, Tri(C₈-C₁₂)-alkylester der Phosphorsäure, oder (C₆-C₁₀)-Arylester von C₁₀-C₂₁-Alkansulfonsäuren.
In einer bevorzugten Ausführungsform der Erfindung enthält die erfindungsgemäße Zusammenensetzung zusätzlich Polyvinylchlorid c).

Der Begriff C₁-C₁₂- Alkyl-/ C₇- C₁₈ -Alkylaryl-substituierte C₇-C₃₀-Arylene umfasst dabei über die N=C=N-Gruppe über das aromatische Kohlenstoffatom des Benzolringes angebundene gegebenenfalls substituierte Benzolverbindungen, siehe beispielsweise Formel (II), aber auch über die N=C=N-Gruppe über das aromatische Kohlenstoffatom des Benzolringes angebundene gegebenenfalls substituierte Benzolverbindungen, deren Benzolreste über Alkylengruppen verbrückt an die N=C=N-Gruppe über das aromatische Kohlenstoffatom des Benzolringes angebunden sind, siehe beispielsweise Formel (III).

Als polymere aromatische Carbodiimide (a) sind Carbodiimide mit endständigen Harnstoff- und/oder Urethangruppen der Formel 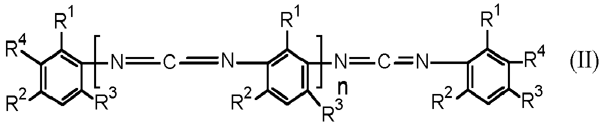 bevorzugt,
bei denen R⁴ gleich oder verschieden sein kann und ausgewählt ist aus der Gruppe der -NHCONHR⁵, -NHCONR⁵R⁶ oder -NHCOOR⁷,
wobei R⁵ und R⁶ gleich oder verschieden sind und einen C₁-C₁₂-Alkyl-, C₆-C₁₂-Cycloalkyl-, C₇ - C₁₈ -Aralkylrest - oder Arylrest darstellen
R⁷ einem C₁ - C₂₂ - Alkyl-, C₆ - C₁₂ -Cycloalkyl-, C₆ - C₁₈ -Aryl oder C₇ - C₁₈ -Aralkylrest, sowie einem ungesättigten Alkylrest mit 2 - 22, bevorzugt 12-20, besonders bevorzugt 16-18 Kohlenstoffatomen, oder ein Alkoxypolyoxyalkylenrest entspricht,
R¹, R² und R³ jeweils unabhängig für Methyl- oder Ethyl steht, wobei jeder Benzolring nur eine Methyl-Gruppe aufweist und n = 1 bis 10 bedeutet.

Bevorzugt sind Carbodiimide der Formel (II) mit R⁴ = -NHCOOR⁷, wobei R⁷ ein Alkoxypolyoxyalkylenrest ist, R¹, R² und R³ jeweils unabhängig für Methyl- oder Ethyl steht, wobei jeder Benzolring nur eine Methyl-Gruppe aufweist und n = 1 bis 10, bevorzugt n = 1 bis 4, besonders bevorzugt n = 1 bis 3 ist.

Bevorzugte Alkoxypolyoxyalkylenreste sind Polyethylenglykolmonomethylether mit Molmassen von 200 - 600 g/mol, besonders bevorzugt von 350 - 550 g/mol.

Der Carbodiimid-Gehalt (NCN-Gehalt, gemessen durch Titration mit Oxalsäure) der erfindungsgemäß eingesetzten Carbodiimide liegt vorzugsweise bei 2 - 10 Gew.%, bevorzugt 4 - 8 Gew.%, besonders bevorzugt bei 5 - 7 Gew.%.

Die erfindungsgemäß eingesetzten Carbodiimide weisen darüber hinaus vorzugsweise mittlere Molmassen (Mw) von 1000 - 5000 g/mol, bevorzugt 1500 - 4000 g/mol, besonders bevorzugt 2000 - 3000 g/mol auf.

Weiterhin sind Carbodiimide bevorzugt, die eine Polydispersität D = Mw/Mn von 1,2 - 2,2, besonders bevorzugt von 1,4 - 1,8 aufweisen.

In einer weiteren bevorzugten Ausführungsform der Erfindung sind Carbodiimide mit endständigen Harnstoff- und oder Urethangruppen der Formel (III) bevorzugt 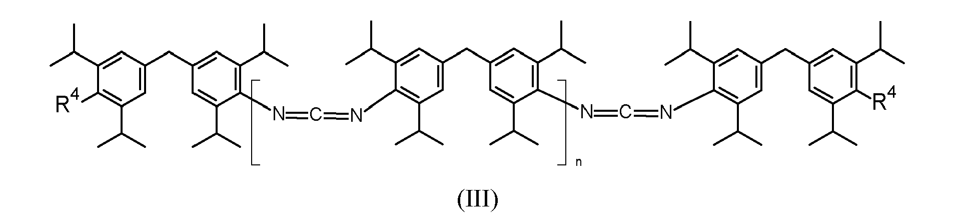 in der
R⁴ ausgewählt ist aus der Gruppe der-NHCONHR⁵, -NHCONR⁵R⁶ oder-NHCOOR⁷,
wobei R⁵ und R⁶ gleich oder verschieden sind und einen C₁-C₁₂-Alkyl-, C₆-C₁₂-Cycloalkyl-, C₇ - C₁₈ -Aralkylrest - oder C₆ - C₁₈ -Arylrest darstellen,
R⁷ einem C₁ - C₂₂ - Alkyl-, C₆ - C₁₂ -Cycloalkyl-, C₆ - C₁₈ -Aryl oder C₇ - C₁₈ -Aralkylrest, sowie einem ungesättigten Alkylrest mit 2 - 22, bevorzugt 12-20, besonders bevorzugt 16-18 Kohlenstoffatomen, oder ein Alkoxypolyoxyalkylenrest entspricht,
   und
n = 1 bis 20, bevorzugt n = 1 bis 15 ist.

Der Carbodiimid-Gehalt (NCN-Gehalt, gemessen durch Titration mit Oxalsäure) der erfindungsgemäßen Carbodiimide liegt vorzugsweise bei 2 - 10 Gew.%.

Bevorzugte Alkoxypolyoxyalkylenreste sind Polyethylenglykolmonomethylether mit Molmassen von 200 - 600 g/mol, besonders bevorzugt von 350 - 550 g/mol.

Bevorzugt sind Carbodiimide der Formel (III) mit R = -NHCOO⁷-Rest mit R⁷ ein Alkoxypolyoxyalkylen oder ein ungesättigter Alkylrest mit 18 Kohlenstoffatomen ist, und n= 0 bis 20, bevorzugt n = 1 bis 10, besonders bevorzugt n = 2 bis 8, ganz besonders bevorzugt n = 3 bis 6.

Der Carbodiimid-Gehalt dieser bevorzugten Carbodiimide liegt vorzugsweise bei 2 - 8 Gew.%, besonders bevorzugt bei 3 - 6 Gew.%, ganz besonders bevorzugt bei 4 - 5 Gew.%.

Die erfindungsgemäßen Carbodiimide weisen darüber hinaus vorzugsweise mittlere Molmassen (Mw) von 1000 - 10000 g/mol, bevorzugt 2000 - 8000 g/mol, besonders bevorzugt 3000 - 6000 g/mol auf.

Als Komponente b) eingesetzte Ester im Sinne der Erfindung sind bevorzugt Polyester von 1,2-Propandiol und/oder 1,3- und/oder 1,4-Butandiol und/oder Diethylenglykol und/oder Dipropylenglykol und/oder Polypropylenglykol und/oder Glyzerin und/oder Pentaerythritol mit Adipinsäure und/oder Sebazinsäure und/oder Bernsteinsäure, auch mit endständiger Essigsäure, und/oder C₁₀-C₁₈-Fettsäuren, und/oder 2-Ethylhexanol, und/oder Isononanol und/oder n-Octanol und/oder n-Decanol sowie Di (2-ethylhexyl) adipat, Di isononyl phthalat, Di propylheptyl phthalat, 1,2-Cyclohexandicarbonsäurediisononylester, 1,2-Cyclohexandicarbonsäuredi (2-ethylhexyl) ester, Pentaerythritol tetravalerat, Di (2-ethylhexyl) terephthalat, Tri (2-ethylhexyl) trimellitat, Diphenyl isodecyl phosphat, Diphenyl 2-ethylhexyl phosphat, Isopropylphenyl diphenyl phosphat, tert. Butylphenyl diphenyl phosphat und (C₁₀-C₂₁)Alkansulfonsäure-phenylester.

Die Komponenten (b) und (a) werden dabei vorzugsweise in einem Verhältnis von 200 : 1 bis 10 : 1 Gewichtsteilen, bevorzugt 50:1 bis 20 :1 Gewichtsteilen, besonders bevorzugt 40 : 1 bis 30 : 1 Gewichtsteilen eingesetzt.

In einer weiteren bevorzugten Ausführungsform der Erfindung enthält die Zusammensetzung zudem Polyvinylchlorid c).

Bei dem im Sinne der Erfindung eingesetzten Polyvinylchloriden c) handelt es sich vorzugsweise um handelsübliches Polyvinylchlorid, wie es beispielsweise bei der Inovyn Deutschland GmbH kommerziell erhältlich ist. Das in der erfindungsgemäßen Zusammensetzung enthaltene Polyvinylchlorid wird vorzugsweise durch Homopolymerisation aus Vinylchlorid nach dem Fachmann bekannten Methoden wie der Suspensions-, der Microsuspensions-, der Emulsions- oder der Massepolymerisation hergestellt.

In einer weiteren bevorzugten Ausführungsform der Erfindung enthält die Zusammensetzung zudem Zusatzstoffe d).

In diesen Fällen, in denen die Zusammensetzung Polyvinylchlorid c), polymeres aromatisches Carbodiimid a), mindestens einen oder mehrerer Ester b) sowie gegebenenfalls weitere Zusatzstoffe d) entfällt, weist diese vorzugsweise 200 Gewichtsteile eines oder mehrerer Ester b) : 1 Gewichtsteil polymerem aromatischem Carbodiimide a)
bis 10 Gewichtsteile eines oder mehrerer Ester b) : 1 Gewichtsteil polymeres aromatisches Carbodiimid a) auf und
die Summe aus polymerem aromatischem Carbodiimid a) und einen oder mehrerer Ester (Weichmacher) b) entspricht einer Menge von 10 - 100 Gewichtsteilen pro 100 Gewichtsteile Polyvinylchlorid.

In einer weiteren bevorzugten Ausführungsform enthält die Polyvinylchlorid-haltige Zusammensetzung
vorzugsweise 40 Gewichtsteile eines oder mehrerer Ester b) : 1 Gewichtsteil polymerem aromatischem Carbodiimid a)
bis 30 Gewichtsteile eines oder mehrerer Ester b) : 1 Gewichtsteil polymerem aromatischem Carbodiimid c), wobei
die Summe aus polymerem aromatischem Carbodiimid a) und eines oder mehrerer Ester (Weichmacher) b) einer Menge von 10 - 100 Gewichtsteilen pro 100 Gewichtsteile Polyvinylchlorid entspricht.

In einer weiteren Ausführungsform betrifft die vorliegende Erfindung eine Zusammensetzung enthaltend a) und b) gegebenenfalls Polyvinylchlorid c), und einen oder mehrere Zusatzstoffe d) ausgewählt aus der Gruppe PVC-Stabilisatoren, Gleitmittel, Füllstoffe, Pigmente, Flammschutzmittel, Lichtstabilisatoren, Treibmittel, polymere Verarbeitungshilfsmittel, Schlagzähverbesserer, optische Aufheller und Antistatika, wie beispielsweise Natrium-(C₁₃-C₁₇)-Alkylsulfonate und Glycerinmonooleat.

Bevorzugt ist dabei eine Zusammensetzung enthaltend a) und b), Polyvinylchlorid c), und einen oder mehrere Zusatzstoffe d) ausgewählt aus der Gruppe PVC-Stabilisatoren, Gleitmittel, Füllstoffe, Pigmente, Flammschutzmittel, Lichtstabilisatoren, Treibmittel, polymere Verarbeitungshilfsmittel, Schlagzähverbesserer, optische Aufheller und Antistatika, wie beispielsweise Natrium-(C₁₃-C₁₇)-Alkylsulfonate und Glycerinmonooleat.

Diese Zusatzstoffe d) können in beliebiger Kombination enthalten sein. Im Folgenden werden einige geeignete Zusatzstoffe näher beschrieben. Die aufgeführten Beispiele stellen jedoch keine Einschränkung der erfindungsgemäßen Polyvinylchlorid-Zubereitung dar, sondern dienen lediglich der Erläuterung. Alle %-Angaben beziehen sich auf das Gewicht der gesamten Polyvinylchlorid-Zubereitung im Fall der Polyvinylchlorid-haltigen Zusammensetzung, ansonsten auf das Gewicht der Zusammensetzung aus den Komponenten a) und b).

Die nachstehend genannten Zusatzstoffe d), wie vorzugsweise Stabilisatoren, Gleitmittel, Weichmachern, Füllstoffe, Pigmente, Flammschutzmittel, Lichtstabilisatoren, Treibmittel, polymere Verarbeitungshilfsmittel und/oder Schlagzähverbesserer sind somit auch in Kombination mit a) und b) ohne die Anwesenheit von PVC c) einsetzbar,

PVC-Stabilisatoren neutralisieren die während und/oder nach der Verarbeitung des Polyvinylchlorid abgespaltene Salzsäure. Als PVC-Stabilisatoren kommen alle üblichen Polyvinylchlorid-Stabilisatoren in fester und flüssiger Form in Betracht, beispielsweise Epoxy/Zink-, Ca/Zn-, Ba/Zn-, Pb- oder Sn-Stabilisatoren sowie metallfreie Stabilisatoren und auch säurebindende Schichtsilikate wie Hydrotalcit. Erfindungsgemäße, vorzugsweise Polyvinylchlorid-haltige, Zusammensetzungen können vorzugsweise 0 - 7 %, bevorzugt 0,1 - 5 %, besonders bevorzugt 0,2 - 4 % und insbesondere 0,5 - 3 % Stabilisatoren enthalten.

In einer weiteren bevorzugten Ausführungsform sollen Gleitmittel zwischen den Polyvinylchlorid-Partikeln wirksam werden und Reibungskräften beim Mischen, Plastifizieren und Verformen entgegenwirken. Als Gleitmittel kann die erfindungsgemässe Polyvinylchlorid-haltige Zusammensetzungen alle für die Verarbeitung von Kunststoffen üblichen Gleitmittel enthalten, bevorzugt Kohlenwasserstoffe, besonders bevorzugt Öle, Paraffine und PE-Wachse, Fettalkohole mit 6 bis 20 C- Atomen, Ketone, Carbonsäuren, bevorzugt Fettsäuren oder Montansäuren, oxidiertes PE-Wachs, Metallsalze von Carbonsäuren, Carbonsäureamide sowie Carbonsäureester, bevorzugt mit den Alkoholen Ethanol, Fettalkoholen, Glycerin, Ethandiol, Pentaerythrit oder langkettigen Carbonsäuren als Säurekomponente. Die erfindungsgemäßen, vorzugsweise Polyvinylchlorid-haltigen, Zusammensetzungen enthalten vorzugsweise 0 - 10 %, bevorzugt 0,05 - 5 %, besonders bevorzugt 0,1 - 3 % und insbesondere von 0,2 - 2 % Gleitmittel.

In einer weiteren bevorzugten Ausführungsform beeinflussen Füllstoffe vor allem die Druck-, Zug- und Biegefestigkeit sowie die Härte und Wärmeformbeständigkeit von weichgemachtem Polyvinylchlorid in positiver Weise. Die erfindungsgemässen, vorzugsweise Polyvinylchlorid-haltigen, Zusammensetzungen können als Füllstoffe Ruß, natürliche Calciumcarbonate, wie beispielsweise Kreide, Kalkstein und Marmor, synthetische Calciumcarbonate, Dolomit, Silikate, Kieselsäure, Sand, Diatomeenerde, Aluminiumsilikate, wie Kaolin, Glimmer und Feldspat, andere anorganische Füllstoffe und organische Füllstoffe, wie Holzmehl, -späne, oder -fasern enthalten. Vorzugsweise werden als Füllstoffe Calciumcarbonate, Kreide, Dolomit, Kaolin, Silikate, Talkum oder Ruß eingesetzt. Die erfindungsgemäße, vorzugsweise Polyvinylchlorid-haltige, Zusammensetzung enthält vorzugsweise 0 - 80 %, bevorzugt 0,1 - 60 %, besonders bevorzugt 0,5 - 50 % und insbesondere 1 - 40 % Füllstoffe.

Die erfindungsgemäßen, vorzugsweise Polyvinylchlorid-haltige Zusammensetzungen können auch Pigmente enthalten, um das erhaltene Produkt farblich an unterschiedliche Einsatzmöglichkeiten anzupassen. Dazu werden sowohl anorganische Pigmente als auch organische Pigmente eingesetzt. Als anorganische Pigmente können beispielsweise Cadmium-Pigmente, wie CdS, Kobalt-Pigmente, wie CoO/Al₂O₃, und Chrom-Pigmente, beispielsweise Cr₂O₃, verwendet werden. Als organische Pigmente kommen beispielsweise Monoazopigmente, kondensierte Azopigmente, Azomethinpigmente, Anthrachinonpigmente, Chinacridone, Phthalocyaninpigmente, Dioxazinpigmente und Anilinpigmente in Betracht. Die erfindungsgemäße, vorzugsweise Polyvinylchlorid-haltige, Zusammensetzung enthält vorzugsweise 0 - 10 %, bevorzugt 0,05 - 5 %, besonders bevorzugt 0,1 - 3 % und insbesondere von 0,5 - 2 % Pigmente.

Um die Entflammbarkeit zu vermindern und die Rauchentwicklung beim Verbrennen zu verringern, können die erfindungsgemäßen, vorzugsweise Polyvinylchlorid-haltigen, Zusammensetzungen auch Flammschutzmittel enthalten. Als Flammschutzmittel werden bevorzugt Antimontrioxid, Phosphorsäureester, Chlorparaffin, Aluminiumhydroxid, Borverbindungen, Zinkverbindungen, Molybdäntrioxid, Ferrocen, Calciumcarbonat oder Magnesiumcarbonat verwendet. Die erfindungsgemäße, vorzugsweise Polyvinylchlorid-haltige, Zusammensetzung enthält vorzugsweise 0 - 30 %, bevorzugt 0,1 - 25 %, besonders bevorzugt 0,2 - 20 % und insbesondere 0,5 - 15 % Flammschutzmittel.

Um Artikel, die aus der erfindungsgemäßen Polyvinylchlorid-Zubereitung hergestellt wurden vor einer Schädigung durch den Einfluss von Licht zu schützen, können Lichtstabilisatoren zugesetzt werden. Dazu werden bevorzugt Hydroxybenzophenone oder Hydroxyphenylbenzotriazole eingesetzt. Die erfindungsgemäße vorzugsweise, Polyvinylchlorid-haltige, Zusammensetzung enthält vorzugsweise 0 - 7 %, bevorzugt 0,1 - 5 %, besonders bevorzugt 0,2 - 4 % und insbesondere 0,5 - 3 % Lichtstabilisatoren.

Die erfindungsgemäße, vorzugsweise Polyvinylchlorid-haltige, Zusammensetzung kann zur Herstellung von Schaumstoffen unter Verwendung von Treibmitteln verwendet werden. Dazu werden dieser Zusammensetzung vorzugsweise chemisch oder physikalisch wirkende Treibmittel zugefügt. Als chemisch wirkende Treibmittel kommen alle für diesen Zweck bekannten Substanzen in Betracht, bevorzugt Azodicarbonamid, p-Toluolsulfonylhydrazid, 4,4'-Oxybis(benzolsulfohydrazid), p-Toluolsulfonylsemicarbazid, 5-Phenyltetrazol, N,N'-Dinitrosopentamethylentetramin, Zinkcarbonat oder Natriumhydrogencarbonat sowie diese Substanzen enthaltende Mischungen. Als physikalisch wirkende Treibmittel sind bevorzugt Kohlendioxid oder Halogenkohlenwasserstoffe geeignet. Die erfindungsgemäße, vorzugsweise Polyvinylchlorid-haltige Zusammensetzung enthält vorzugsweise 0 - 20 %, bevorzugt 0,05 - 15 %, besonders bevorzugt 0,1 - 10 % und insbesondere 0,7 - 3 % Treibmittel.

Die erfindungsgemäße, vorzugsweise Polyvinylchlorid-haltige, Zusammensetzung kann auch weitere Kunststoffe enthalten, die beispielsweise als polymere Verarbeitungshilfsmittel oder Schlagzähverbesserer wirken. Diese weiteren Kunststoffe werden vorzugsweise ausgewählt aus der Reihe der Homo- und Copolymeren auf Basis von Ethylen, Propylen, Butadien, Vinylacetat, Glycidylacrylat, Glycidylmethacrylat, Acrylaten und Methacrylaten mit Alkoholkomponenten von verzweigten oder unverzweigten C1- bis C10-Alkoholen, Styrol oder Acrylnitril. Besonders bevorzugt sind Polyacrylate mit gleichen oder verschiedenen Alkoholresten aus der Gruppe der C4- bis C8-Alkohole, insbesondere des Butanols, Hexanols, Octanols und 2-Ethylhexanols, Polymethylmethacrylat, Methyl-methacrylat-Butylacrylat-Copolymere, Methyl-methacrylat-Butylmethacrylat-Copolymere, Ethylen-Vinylacetat-Copolymere, chloriertes Polyethylen, Nitrilkautschuk, Acrylnitril-Butadien-Styrol-Copolymere, Ethylen-Propylen-Copolymere, Ethylen-Propylen-Dien-Copolymere, Styrol-Acrylnitril-Copolymere, Acrylnitril-Butadien-Rubber, Styrol-Butadien-Elastomere und Methylmethacrylat-Styrol-Butadien-Copolymere.

Bei ihrem Einsatz, insbesondere als Weichmacher, verfügen die erfindungsgemäßen Zusammensetzungen aus a) und b) über gute anwendungstechnische Eigenschaften, insbesondere erlauben sie die emissionsarme Herstellung des weichgemachten Endproduktes. Der Einsatz der erfindungsgemäßen Zusammensetzungen in weichgemachten Kunststoffen, vorzugsweise Polyvinylchlorid c), ermöglicht, bedingt durch die Stabilisierung gegen Hydrolyse des Esters b), die Herstellung langlebiger Produkte.

Die erfindungsgemäßen Zusammensetzungen lassen sich in bekannter Art und Weise durch Mischen der Komponenten a) und b) und gegebenenfalls mindestens einem Polyvinylchlorid c) und gegebenenfalls mindestens einem Zusatzstoff d) in einer Mischapparatur, vorzugsweise in Rühr- und Mischwerken, Verdünnungsanlagen und statischen Mischern, in den für diese Komponenten angegebenen Mengenverhältnissen herstellen. Dabei können die Komponenten a) und b) der erfindungsgemäßen Zusammensetzung zuerst gemischt werden und dann mit den gegebenenfalls eingesetzten Komponenten c) und gegebenenfalls d) gemischt werden oder es können jeweils die Komponenten a) und b) getrennt zu den Komponenten c) und gegebenenfalls d) gegeben werden und dann gemischt werden.

Die erfindungsgemäßen Polyvinylchlorid-Zusammensetzungen können als Trockenmischung, dry blends, oder Flüssigmischungen, Pasten, gemischt und gegebenenfalls nach einer zusätzlichen Aufarbeitung zum Granulat weiter verarbeitet werden.

Derartige Verarbeitungsprozesse sind, nicht einschränkend, Extrudieren, Spritzgießen, Spritzen, Kalandrieren, Rotationsformen, Tauchen, Streichen, Beschichten, Sintern, und Gießen.

Gegenstand der vorliegenden Erfindung ist auch ein Verfahren zur Herstellung von Kunststoff, insbesondere Polyvinylchlorid, das dadurch gekennzeichnet ist, dass mindestens ein Kunststoff, insbesondere Polyvinylchlorid c), mit einer erfindungsgemäßen Zusammensetzung enthaltend a) und b) in einer Mischvorrichtung gemischt und homogenisiert wird, anschließend die Mischung geformt wird, insbesondere durch Extrudieren, Spritzgießen, Spritzen, Kalandrieren, Rotationsformen, Tauchen, Streichen, Beschichten, Sintern oder Gießen ausgeformt und die geformte Mischung dann erhitzt wird, vorzugsweise auf eine Temperatur im Bereich von 150 bis 220 °C.

Die mittels der erfindungsgemäßen Zusammensetzungen hergestellten Kunststoffe, insbesondere Polyvinylchlorid c), sind ebenfalls Gegenstand der vorliegenden Erfindung.

Diese erfindungsgemäßen Kunststoffe insbesondere aus insbesondere Polyvinylchlorid können weiterverarbeitet werden. Solche Endprodukte sind insbesondere Fußböden, Tapeten, Kunstleder, Profile, Draht- und Kabelummantelungen, Folien, Beschichtungen und Beschichtungsmassen, Lacke, Farben, Tinten, Klebstoffe, Dichtstoffe, Klebstoff-, Dichtstoff- und Klebdichtstoffkomponenten.

Ein weiterer Gegenstand der vorliegenden Erfindung ist zudem die Verwendung der erfindungsgemäßen Zusammensetzung zur Herstellung der genannten Endprodukte.

Der Rahmen der Erfindung erfasst alle oben stehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Die nachfolgenden Beispiele dienen der Erläuterung der Erfindung, ohne dabei limitierend zu wirken.

### Ausführungsbeispiele:

### Bestimmung der Hydrolysestabilität:

In einer Porzellanschale wurden 100 g Polyvinylchlorid c) (Vinnolit® S4170, Vinnolit GmbH & Co. KG, Deutschland), mit 60 phr (Gewichtsteile pro 100 Gewichtsteile PVC) einem Polyester aus Adipinsäure und 1,2-Propandiol und 2-Ethylhexanol b), Viskosität 12.000 mPas bei 23°C) und 2 Teilen eines polymeren aromatischen Carbodiimides CDI 1 bzw. CDI 2 mit CDI 1 = Carbodiimid der Formel (III) mit n = ca. 4 und R⁴ = -NHCOOR⁷ mit R⁷ = Cyclohexyl und CDI 2 = Carbodiimid der Formel (II) mit n = ca. 4 und R⁴ = - NHCOOR⁷ mit R⁷ = Cyclohexyl und 3 phr PVC-Stabilisator (Ca/Zn-Carboxylat) d) mit einem Stab so gemischt, dass die flüssigen Bestandteile vom Pulver gut aufgenommen wurden und nicht an dem Gefäß haften. Die so erhaltene Pulvermischung wurde portionsweise in den Walzenspalt (0,7 mm) eines Zweiwalzenstuhles bei 165°C Walzentemperatur gegeben und homogenisiert und geliert. Nach der Fellbildung wurde der Walzenspalt auf 1 mm erweitert. Das Mischergebnis wurde durchhäufiges Einschlagen des Walzfelles verbessert. Nach einer Misch- und Verarbeitungszeit von 10 Minuten wurde das Walzfell abgenommen. Nach Portionierung wurden Prüffolien gepresst (200 mm X 200 mm x 1 mm). Die Temperatur der Presse betrug 170 °C; die Presszeit betrug insgesamt 10 Minuten, davon Minuten Aufheizphase mit einem Druck < 10 bar und 3 Minuten Presszeit unter Hochdruck > 100 bar. Nach Abkühlen unter Druck in einer Kühlpresse auf maximal 30°C wurden die Prüfkörper entformt. Die Prüffolien wurden auf 0,0001 g genau ausgewogen. Hiernach wurde eine Prüffolie 14 Tage in einem Ofen bei 70° in mit Feuchtigkeit gesättigter Atmosphäre über Wasser gelagert. Nach Entnahme der Prüffolien werden diese von gegebenenfalls anhaftender Feuchtigkeit oder Tröpfchen befreit und nach 2 Tagen Konditionierung bei 20°C und 40% Luftfeuchtigkeit gewogen.

Von jeder Art der Folie vor und nach Ofenlagerung wurde ein S4 Stab ausgestanzt und im Zugversuch (Ametek Lloyd Instruments Reißmaschine LRSKplus, Abzugsgeschwindigkeit 200 mm/min) die Dehnung 100% vor und nach Lagerung bestimmt und als prozentuale Differenz zum Ausgangswert der nicht gelagerten Folie ausgewertet.

### Weichmachende Wirkung

Zur Bestimmung der weichmachenden Wirkung der erfindungsgemäßen Zusammensetzung wurden Walzfelle aus Polyvinylchlorid-Compounds der in Tabelle 1 angegebenen Zusammensetzung hergestellt. Aus den Walzfellen wurden Prüfkörper mit 35 mm Durchmesser gepresst, deren Shore-Härte mittels eines digitalen Shore-Härte-Testers (Zwick GmbH & Co. KG, Ulm) bestimmt wurde. Die Ergebnisse (Mittelwerte von jeweils fünf Messungen) dieser Prüfung sind in Tabelle 2 aufgeführt.

**Tabelle 1: Zusammensetzung (Gew. -Teile) der Mischungen für die Prüfkörper der erfindungsgemäßen Beispiele B1 und B2 und des Vergleichsbeispiels V1.**

| | V1 | B1 | B2 |
|---|---|---|---|
| PVC (c) | 100 | 100 | 100 |
| Adipinsäurepolyester (b) | 60 | 60 | 60 |
| Ca/Zn-Carboxylat (d) | 3 | 3 | 3 |
| CDI 1 (a) | 0 | 2 | 0 |
| CDI 2 (a) | 0 | 0 | 2 |

Mit CDI 1 = Carbodiimid der Formel (III) mit n = 4 und R⁴ =-NHCOOR⁷ mit R⁷ = Cyclohexyl, mittlere Gewichts-Molmasse: ca. 6000 g/mol, D = 1,84.Mit CDI 2 = Carbodiimid der Formel (II) mit n = 4 und R⁴ = -NHCOOR⁷ mit R⁷ = Cyclohexyl, mittlere Gewichts-Molmasse: ca. 2500 g/mol, D = 1,85.

**Tabelle 2: Die Shore-Härten der ungelagerten Prüfkörper, die Gewichtsdifferenzen der Prüfplatten und die Unterschiede in der 100% Dehnung der S4-Stäbe vor / nach Ofenlagerung in feuchtigkeitsgesättigter Atmosphäre der erfindungsgemäßen Beispiele B1 und B2 und des Vergleichsbeispiels V 1.**

| | V1 | B1 | B2 |
|---|---|---|---|
| Shore A | 82 | 81 | 81 |
| Gewichtsänderung der Prüfplatten nach Ofenlagerung | - 0,6 % | +/- 0,0 % | + 0,1 % |
| Änderung Spannung 100% Dehnung nach Ofenlagerung | 117% | 112% | 111% |

### Auswertung weichmachende Wirkung

Die weichmachende Wirkung verschiedener Weichmacher bei gleichen Einsatzmengen kann anhand von Härtebestimmungen verglichen werden. Wie die Messergebnisse aus Tabelle 1 zeigen, können mit den erfindungsgemäßen Zusammensetzungen Polyvinylchlorid-Compounds hergestellt werden, deren Härtegrade durch Beimischung der Carbodiimide CDI 1 und CDI 2 (Beispiele B1 und B2) zum Vergleich (Beispiel V1) beeinträchtigt.

### Auswertung Gewichtsänderung und Spannung 100% Dehnung

Durch den Zusatz der Komponente a) (Beispiele B 1 und B2) wird der durch Luftfeuchtigkeit induzierte Abbau des Esters (Weichmachers) b) und die damit verbundene Gewichtsreduktion im Vergleich zum Beispiel V1 ohne aromatisches polymeres Carbodiimid verringert und die Änderung beziehungsweise die Erhöhung der Spannung bei 100% Dehnung reduziert.

### Auswertung

Es zeigt sich somit, dass die erfindungsgemäßen Zusammensetzungen die gewünschten weichmachenden Eigenschaften aufweisen, wobei die Hydrolyseempfindlichkeit des Esters wirksam durch das polymere aromatische Carbodiimid vor allem in PVC verhindert wird, siehe Tabelle 2.

## Patentansprüche

1. Zusammensetzung enthaltend
(a) mindestens ein polymeres aromatisches Carbodiimid, der Formel (I)
R⁴-R²-(-N=C=N-R²-)ₘ-R⁴ (I),
indem
m einer ganzen Zahl von 2 bis 500, bevorzugt 3 bis 20, ganz besonders bevorzugt 4 bis 10 entspricht,
R² = Arylen, C₁-C₁₂Alkyl-/ C₇- C₁₈ -Alkylaryl-substituierte C₇-C₃₀-Arylene
und
R⁴ =-NCO_{,} -NCNR², -NHCONHR⁵, -NHCONR⁵R⁶ oder-NHCOOR⁷ ist,
wobei R⁵ und R⁶ gleich oder verschieden sind und einen C₁-C₁₂-Alkyl-, C₆-C₁₂-Cycloalkyl-, C₇-C₁₈-Aralkyl- oder Arylrest darstellen und R⁷ einem C₁ - C₂₂ - Alkyl-, C₆ - C₁₂ -Cycloalkyl-, C₆ - C₁₈ -Aryl oder C₇ - C₁₈ -Aralkylrest, sowie einem ungesättigten Alkylrest mit 2 - 22 oder ein Alkoxypolyoxyalkylenrest entspricht,
(b) mindestens einen Ester ausgewählt aus der Gruppe der C₉-C₁₀-Alkylester der Benzoesäure, Di- (C₈-C₁₂ )-Alkylester aliphatischer Dicarbonsäuren, vorzugsweise Bernsteinsäure, Adipinsäure und/oder Sebazinsäure, Polyester von aliphatischen Dicarbonsäuren vorzugsweise Bernsteinsäure, Adipinsäure und/oder Sebazinsäure, oder C₂-C₅- aliphatischen Di-, Tri- und Tetrolen, deren Endgruppen unverestert oder mit monofunktionellen Verbindungen, bevorzugt C₄-C₁₀- Monoalkoholen oder C₂-C₁₈- Monocarbonsäuren, verestert sind und deren zahlenmittlere Molmasse 1 000 - 20 000 g/mol beträgt, Tri(C₂-C₆)-alkylester der Zitronensäure, acetylierte Tri(C₂-C₆)-alkylester der Zitronensäure, Glycerinester, Benzoesäurediester von Mono-, Di-, Tri- oder Poly(C₂-C₃)-alkylenglycolen, Trimethylolpropanester, Di(C₈-C₁₂)-alkylester von Cyclohexandicarbonsäuren, Di(C₈-C₁₂)-alkylester der Terephthalsäure, Di(C₈-C₁₂)-alkylester der Phthalsäure, Tri(C₈-C₁₂)-alkylester der Trimellitsäure, Tri(C₆-C₁₀)-arylester der Phosphorsäure, Di(C₆-C₁₀)-aryl(C₈-C₁₂)-alkylester der Phosphorsäure, Tri(C₈-C₁₂)-alkylester der Phosphorsäure, oder (C₆-C₁₀)-Arylester von C₁₀-C₂₁-Alkansulfonsäuren.

2. Zusammensetzung nach Anspruch 1, **dadurch gekennzeichnet, dass** diese als weitere Komponente Polyvinylchlorid (c) enthält.

3. Zusammensetzung nach Anspruch 1 oder 2 , **dadurch gekennzeichnet, dass** es sich bei den polymeren aromatischen Carbodiimide um Verbindungen der Formel (II) handelt, 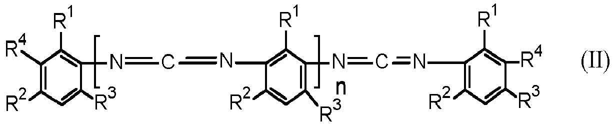
bei denen R⁴ ausgewählt ist aus der Gruppe der -NHCONHR⁵, -NHCONR⁵R⁶ oder -NHCOOR⁷ ist,
wobei R⁵ und R⁶ gleich oder verschieden sind und einen C₁-C₁₂-Alkyl-, C₆-C₁₂-Cycloalkyl-,C₇ - C₁₈ -Aralkylrest - oder Arylrest darstellen
R⁷ einem C₁ - C₂₂ - Alkyl-, C₆ - C₁₂ -Cycloalkyl-, C₆ - C₁₈ -Aryl oder C₇ - C₁₈ -Aralkylrest, sowie einem ungesättigten Alkylrest mit 2 - 22, bevorzugt 12-20, besonders bevorzugt 16-18 Kohlenstoffatomen, oder ein Alkoxypolyoxyalkylenrest entspricht,
R¹, R² und R³ jeweils unabhängig für Methyl- oder Ethyl steht, wobei jeder Benzolring nur eine Methyl-Gruppe aufweist und n = 1 bis 10 bedeutet.

4. Zusammensetzung nach Anspruch 1 oder 2 , **dadurch gekennzeichnet, dass** es sich bei den polymeren aromatischen Carbodiimiden um Verbindungen der Formel (III) handelt 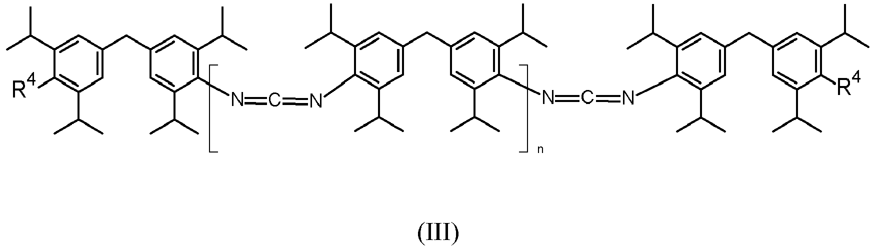 in der
R⁴ ausgewählt ist aus der Gruppe der -NHCONHR⁵, -NHCONR⁵R⁶ oder - NHCOOR⁷ ist,
wobei R⁵ und R⁶ gleich oder verschieden sind und einen C₁-C₁₂-Alkyl-, C₆-C₁₂-Cycloalkyl-,C₇ - C₁₈ -Aralkylrest - oder C₆ - C₁₈ -Arylrest darstellen
R⁷ einem C₁ - C₂₂ - Alkyl-, C₆ - C₁₂ -Cycloalkyl-, C₆ - C₁₈ -Aryl oder C₇ - C₁₈ -Aralkylrest, sowie einem ungesättigten Alkylrest mit 2 - 22, bevorzugt 12-20, besonders bevorzugt 16-18 Kohlenstoffatomen, oder ein Alkoxypolyoxyalkylenrest entspricht, und
- n = 1 bis 20, bevorzugt n = 1 bis 15 ist.

5. Zusammensetzung nach Anspruch 1 bis 4, **dadurch gekennzeichnet, dass** es sich bei dem Ester b) um Polyester von 1,2-Propandiol und/oder 1,3- und/oder 1,4-Butandiol und/oder Diethylenglykol und/oder Dipropylenglykol und/oder Polypropylenglykol und/oder Glyzerin und/oder Pentaerythritol mit Adipinsäure und/oder Sebazinsäure und/oder Bernsteinsäure, gegebenenfalls auch mit endständiger Essigsäure, und/oder C₁₀-C₁₈-Fettsäuren, und/oder 2-Ethylhexanol, und/oder Isononanol und/oder n-Octanol und/oder n-Decanol sowie Di (2-ethylhexyl) adipat, Dipropylheptylphthalat, Diisononylphthalat, 1,2-Cyclohexandicarbonsäurediisononylester, 1,2-Cyclohexandicarbonsäuredi (2-ethylhexyl)ester, Pentaerythritol tetravalerat und Di (2-ethylhexyl) terephthalat, Tri (2-ethylhexyl) trimellitat, Diphenyl isodecyl phosphat, Diphenyl 2-ethylhexyl phosphat, Isopropylphenyl diphenyl phosphat, tert. Butylphenyl diphenyl phosphat und (C10-C21)Alkansulfonsäurephenylester handelt.

6. Zusammensetzung nach einem der Ansprüche 1 bis 5, **dadurch gekennzeichnet, dass** das Verhältnis von (b) zu (a) 200 : 1 bis 10 : 1 Gewichtsteile beträgt, besonders bevorzugt 40 : 1 bis 30 : 1 Gewichtsteile.

7. Zusammensetzung nach einem der Ansprüche 1 bis 6, **dadurch gekennzeichnet, dass** die Zusammensetzung Polyvinylchlorid c), polymerem aromatischem Carbodiimid a), mindestens einen oder mehrerer Ester b) mit vorzugsweise 200 Gewichtsteile eines oder mehrerer Ester: 1 Gewichtsteil polymeres aromatisches Carbodiimid bis 10 Gewichtsteile eines oder mehrerer Ester : 1 Gewichtsteil polymeres aromatisches Carbodiimid enthält und die Summe aus polymerem aromatischem Carbodiimid und eines oder mehrerer Ester eine Menge von 10 - 100 Gewichtsteilen pro 100 Gewichtsteile Polyvinylchlorid entspricht.

8. Zusammensetzung gemäß einem der Ansprüche 1 bis 7, **dadurch gekennzeichnet, dass** ein oder mehrere Zusatzstoffe d) ausgewählt aus der Gruppe PVC-Stabilisatoren, Gleitmittel, Weichmachern, Füllstoffe, Pigmente, Flammschutzmittel, Lichtstabilisatoren, Treibmittel, polymere Verarbeitungshilfsmittel und/oder Schlagzähverbesserer, eingesetzt werden.

9. Verfahren zur Herstellung der Zusammensetzung nach einem der Ansprüche 1 bis 8, **dadurch gekennzeichnet, dass** die Komponenten a) und b) Zusammensetzung gemischt werden und dann gegebenenfalls Komponenten c) und gegebenenfalls einem oder mehrerer Zusatzstoffe d) zugemischt werden..

10. Verwendung der Zusammensetzung gemäß einem der Ansprüche 1 bis 8 zur Herstellung von Rohrleitungen, Kabeln, Draht-Ummantelungen, im Innenausbau, im Fahrzeug- und Möbelbau, in Bodenbelägen, medizinischen Artikeln, Lebensmittelverpackungen, Dichtungen, Folien, Verbundfolien, Folien für Verbundsicherheitsglas, insbesondere für den Fahrzeug-Bereich und den Architektur-Sektor, Kunstleder, Spielzeug, Verpackungsbehältern, Klebebandfolien, Bekleidung, Beschichtungen, sowie Fasern für Gewebe.
